# EUROPEAN PATENT APPLICATION

(11) **EP 4 451 228 A1**
(43) Date of publication of application: **23.10.2024**
(21) Application number: 22921735.1
(22) Date of filing: 26.12.2022
(51) Int. Cl.: G06V 10/44

(54) **OBJECT ATTRIBUTE RECOGNITION METHOD AND APPARATUS, READABLE STORAGE MEDIUM, AND ELECTRONIC DEVICE**

(30) Priority: 21.01.2022 CN 202210074401
(71) Applicant: BEIJING YOUZHUJU NETWORK TECHNOLOGY CO. LTD., Beijing 101299 (CN)
(72) Inventor: MAO, Xiaofei, Beijing 100086 (CN); HUANG, Can, Beijing 100086 (CN)
(74) Representative: Dentons UK and Middle East LLP
(86) International application number: PCT/CN2022/141994
(87) International publication number: WO 2023/138314

(57) **Abstract**

The disclosure relates to a method, apparatus, readable storage medium, and electronic device for object attribute recognition. The method includes: acquiring a target image, the target image comprising a target object and object description information of the target object; extracting, from the target image, a sequence of key information features of the target object and a sequence of multimodal features corresponding to a target attribute of the target object, the sequence of multimodal features comprising a sequence of visual features and a sequence of semantic features of the target attribute; and determining a plurality of object attributes of the target object based on the sequence of key information features and the sequence of multimodal features. In this way, when an attribute of the target object in the target image is recognized, not only the key information features of the target object are referred to, but also the visual features and semantic features of the target attribute are referred to, so that the feature dimensions of the target object are richer and the information is more comprehensive, thereby improving the accuracy of the object attribute recognition and the richness of the object attributes.

## Description

### CROSS-REFERENCE TO RELATED APPLICATION

This application claims priority to Chinese patent application No. 202210074401.6, filed on January 21, 2022 and entitled "METHOD, APPARATUS, READABLE STORAGE MEDIUM, AND ELECTRONIC DEVICE FOR OBJECT ATTRIBUTE RECOGNITION", which is incorporated herein by reference in its entirety.

### FIELD

The present disclosure relates to the field of image processing technologies, and specifically, to a method, apparatus, readable storage medium, and electronic device for object attribute recognition.

### BACKGROUND

In recent years, with the rapid development of information technologies, image structuring has become a standard in image understanding. Image structuring is a technology that extracts key target objects (e.g., vehicles, pedestrians, etc.) based on image content information. It organizes image contents into structured information that can be understood by both computers and human beings through spatial and temporal partition, feature extraction, object recognition and other processing device in accordance with the semantic relationship. Among them, recognizing attributes of objects in images is an important functional module of image structuring, which is capable of predicting attribute labels of the objects from the images, such as age, gender, and clothing style of pedestrians, license plate numbers, and durations of vehicles, etc., which can be used for intelligent applications in the image-aware world. How to improve the accuracy and richness of object attribute recognition in images becomes the key to enhance image understanding.

### SUMMARY

This section of Summary is provided to present in brief form ideas, which will be described in detail later in the section of detailed description of specific embodiments. This section of summary is not intended to identify key features or essential features of the claimed technical solution, nor is it intended to limit the scope of the claimed technical solution.

In a first aspect, the present disclosure provides a method of object attribute recognition, comprising:
acquiring a target image, wherein the target image comprises a target object and object description information of the target object;
extracting, from the target image, a sequence of key information features of the target object and a sequence of multimodal features corresponding to a target attribute of the target object, wherein the sequence of multimodal features comprises a sequence of visual features and a sequence of semantic features of the target attribute; and
determining a plurality of object attributes of the target object based on the sequence of key information features and the sequence of multimodal features, wherein the plurality of object attributes comprises the target attribute.

In a second aspect, the present disclosure provides an apparatus for object attribute recognition, comprising:
an acquisition module configured to acquire a target image, wherein the target image comprises a target object and object description information of the target object;
a first extraction module configured to extract, from the target image, a sequence of key information features of the target object and a sequence of multimodal features corresponding to a target attribute of the target object, wherein the sequence of multimodal features comprises a sequence of visual features and a sequence of semantic features of the target attribute; and
a determination module configured to determine a plurality of object attributes of the target object based on the sequence of key information features and the sequence of multimodal features extracted by the first extraction module, wherein the plurality of object attributes comprises the target attribute.

In a third aspect, the present disclosure provides a computer-readable medium having a computer program stored thereon, wherein the program, when executed by a processing device, implements the steps of the method of the first aspect of the present disclosure.

In a fourth aspect, the present disclosure provides an electronic device, comprising:
a storage device having a computer program stored thereon; and
a processing device configured to execute the computer program in the storage device to implement the steps of the method of the first aspect of the present disclosure.

In the above technical solutions, first, a target image is acquired, wherein the target image comprises a target object and object description information of the target object. Then, a sequence of key information features of the target object and a sequence of multimodal features corresponding to a target attribute of the target object is extracted from the target image, wherein the sequence of multimodal features comprises a sequence of visual features and a sequence of semantic features of the target attribute. Finally, a plurality of object attributes of the target object are determined based on the sequence of key information features and the sequence of multimodal features, wherein the plurality of object attributes comprises the target attribute. In this way, when an attribute of the target object in the target image are recognized, not only the key information features of the target object are referred to, but also the visual features and semantic features of the target attribute are referred to, which makes the feature dimensions of the target object richer and the information more comprehensive, and thus improves the accuracy of the object attribute recognition and the richness of the object attributes.

Other features and advantages of the present disclosure will be described in detail in the subsequent section of detailed description of specific embodiments.

### BRIEF DESCRIPTION OF THE SEVERAL VIEWS OF THE DRAWINGS

The above and other features, advantages, and aspects of the implementations of the present disclosure will become more apparent in combination with the accompanying drawings and with reference to the following detailed description. In the drawings, the same or similar reference symbols refer to the same or similar elements. It is to be understood that the drawings are schematic, and that components and elements are not necessarily drawn to scale. In the drawing:
FIG. 1 is a flowchart illustrating a method of object attribute recognition according to an example embodiment.
FIG. 2 is a schematic diagram illustrating a structure of a multimodal feature extraction model according to an example embodiment.
FIG. 3 is a schematic diagram illustrating a structure of a multimodal fusion model according to an example embodiment.
FIG. 4 is a flowchart illustrating a method of object attribute recognition according to another example embodiment.
FIG. 5 is a schematic diagram illustrating a structure of an appearance feature extraction model according to an example embodiment.
FIG. 6 is a flowchart illustrating a method of object attribute recognition according to another example embodiment.
FIG. 7 is a schematic diagram illustrating a structure of a global visual feature extraction model according to an example embodiment.
FIG. 8 is a block diagram illustrating an apparatus for object attribute recognition according to an example embodiment.
FIG. 9 is a block diagram illustrating an electronic device according to an example embodiment.

### DETAILED DESCRIPTION

The embodiments of the present disclosure will be described below with reference to the drawings. Although the drawings illustrate some embodiments of the present disclosure, it should be understood that the present disclosure may be implemented in various forms and is not limited to the embodiments set forth herein. It should be understood that the drawings and the embodiments of the present disclosure are only used for illustrative purposes and are not intended to limit the protection scope of the present disclosure.

It should be understood that the steps described in the method embodiments of the present disclosure may be executed in different sequences and/or in parallel. In addition, the method implementation modes may comprise additional steps and/or omit the execution of the shown steps. The scope of the present disclosure is not limited in this regard.

As used herein, term "comprise" and its variants should be open-ended, i.e., "comprising but not limited to". Term "based on" means " based at least in part on". Term "one embodiment" means "at least one embodiment"; term "another embodiment" means "at least one additional embodiment"; and term "some embodiments" means "at least some embodiments". Relevant definitions of other terms will be provided in the following text.

It needs to be noted that concepts such as "first", "second", and the like mentioned in the present disclosure are only used to distinguish different devices, modules, or units, and are not used to limit the order of functions performed by these devices, modules or units, or interdependence relationship.

It should be noted that terms "one" and "multiple" mentioned in the present disclosure are illustrative and not restrictive, and one skilled in the art should understood that the terms should be understood as "one or more" unless the context clearly indicates otherwise.

The names of massages or information exchanged among multiple devices in the embodiments of the present disclosure are only for illustrative purpose and are not used to limit the range of these messages or the information.

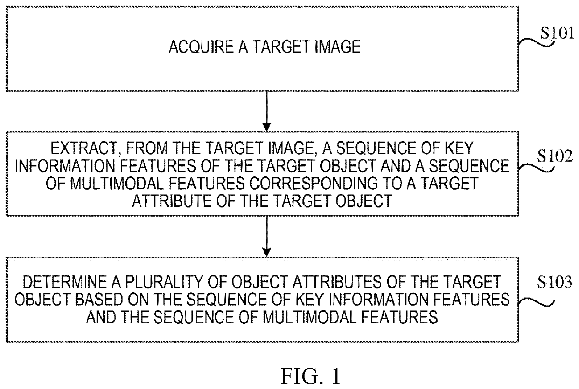

FIG. 1 is a flowchart illustrating a method of object attribute recognition according to an example embodiment. As shown in FIG. 1, the method may comprise the following S101-S103.

In S101, a target image is acquired.

The target image includes a target object (specifically an image of the target object) and object description information of the target object. Herein, the target object may be, for example, a vehicle, a pedestrian, a bookcase, a television, etc. The object description information may be text for describing the target object.

In S102, a sequence of key information features of the target object and a sequence of multimodal features corresponding to a target attribute of the target object are extracted from the target image.

In the present disclosure, the sequence of multimodal features comprises a sequence of visual features and a sequence of semantic features of the target attribute. Herein, the target attribute may be any attribute of the target object that a user focuses on. As an example, the target object may be a person, and the target attribute may be age.

In S103, a plurality of object attributes of the target object are determined based on the sequence of key information features and the sequence of multimodal features.

In the present disclosure, the plurality of object attributes comprise the target attribute.

As an example, the target object is a pedestrian, and the plurality of object attributes may comprise age, height, gender, clothing style, hairstyle, and the like.

As another example, the target object is an item (e.g., a bookcase, a vehicle), and the plurality of object attributes may comprise category, brand, name, basic parameter, capacity/volume, range of use, and the like.

In the above technical solutions, first, a target image is acquired, wherein the target image comprises a target object and object description information of the target object. Then, a sequence of key information features of the target object and a sequence of multimodal features corresponding to a target attribute of the target object is extracted from the target image, wherein the sequence of multimodal features comprises a sequence of visual features and a sequence of semantic features of the target attribute. Finally, a plurality of object attributes of the target object are determined based on the sequence of key information features and the sequence of multimodal features, wherein the plurality of object attributes comprises the target attribute. In this way, when an attribute of the target object in the target image is recognized, not only the key information features of the target object are referred to, but also the visual features and semantic features of the target attribute are referred to, which makes the feature dimensions of the target object richer and the information more comprehensive, and thus improves the accuracy of the object attribute recognition and the richness of the object attributes.

A specific implementation of extracting from the target image the sequence of key information features of the target object in S102 is described hereinafter in detail. Specifically, it can be implemented through the following steps (1) and (2).
(1) Text recognition is performed on the target image to obtain the recognized text.

In the present disclosure, the recognized text may be multilingual text or monolingual text, which is not specifically limited in the present disclosure.

Alternatively, the target image may be inputted into a pre-trained text recognition model to obtain the recognized text. Herein, the text recognition model may be, for example, a convolutional recurrent neural network, a codec network based on an attention mechanism, and the like.

(2) The recognized text is inputted into a pre-trained multilingual language model to obtain the sequence of key information features of the target object.

In the present disclosure, the multilingual language model is configured to extract key object features in the recognized text corresponding to the target image. For an example, the multilingual language model may be composed of a plurality (e.g., 12) of encoding networks in series and a plurality (e.g., 6) of decoding networks in series. Herein, a last encoding network of the plurality of encoding networks in series is in series with a first decoding network of the plurality of decoding networks in series.

The encoding networks are not limited in the embodiments of the present disclosure and may be implemented adopting any of the existing or future emerging encoding networks (e.g., the Encoder module in the transformer model, the Encoder module in the conformer model, etc.).

The decoding networks are not limited in the embodiments of the present disclosure and may be implemented adopting any of the existing or future emerging decoding networks (e.g., the decoder module in the transformer model, the decoder module in the conformer model, etc.).

A specific implementation of extracting, from the target image, a sequence of multimodal features corresponding to a target attribute of the target object in S102 is described hereinafter in detail. Specifically, the target image may be inputted into a pre-trained multimodal feature extraction model to obtain the sequence of multimodal features corresponding to the target attribute of the target object.

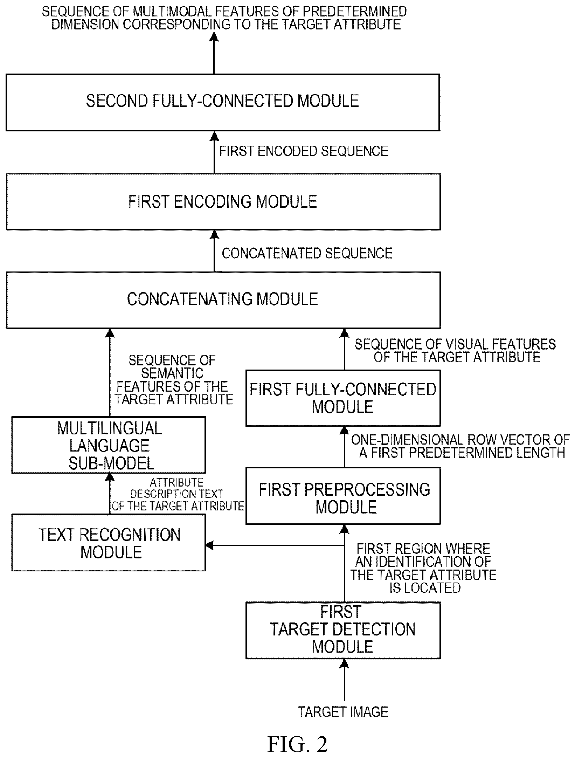

As shown in FIG. 2, the multimodal feature extraction model may comprise a first target detection module, a first preprocessing module, a first fully-connected module, a text recognition module, a multilingual language sub-model, a concatenating module, a first encoding module, and a second fully-connected module.

Herein, the first target detection module is configured to extract from the target image a first region where an identification of the target attribute of the target object is located. The identification may be, for example, a license plate number, a brand logo, and the like. The first preprocessing module is connected to the first target detection module, configured to normalize the first region into an image of a first predetermined size (e.g., 32*32) and straighten the normalized image into a one-dimensional row vector of a first predetermined length (e.g., 1024). The first fully-connected module is connected to the first preprocessing module, configured to generate the sequence of visual features of the target attribute based on the one-dimensional row vector of the first predetermined length. The text recognition module is connected to the first target detection module, configured to perform text recognition on the first region to obtain attribute description text of the target attribute, e.g., a brand word. The multilingual language sub-model is connected to the text recognition module, configured to extract from the attribute description text the sequence of semantic features of the target attribute. The concatenating module is connected to the first fully-connected module and the multilingual language sub-model respectively, configured to concatenate the sequence of visual features and the sequence of semantic features of the target attribute to obtain a concatenated sequence. The first encoding module is connected to the concatenating module, configured to encode the concatenated sequence to obtain a first encoded sequence. The second fully-connected module is connected to the first encoding module, configured to perform dimensionality reduction on the first encoded sequence to obtain the sequence of multimodal features corresponding to the target attribute with a predetermined dimension.

In the present disclosure, the first target detection module may be, for example, a YOLO (You Only Look Once) network, a Single Shot MultiBox Detector (SSD), and the like. The text recognition module may be, for example, a convolutional recurrent neural network, a codec network based on an attention mechanism, and the like. The structure of the multilingual language sub-model may be the same as the multilingual language model.

For an example, the first fully-connected module may comprise 2 fully-connected layers in series. The second fully-connected module may comprise 2 fully-connected layers. The first encoding module may comprise 4 layers of encoding networks in series. The 4 layers of encoding networks in series are not limited in the embodiments of the present disclosure and may be implemented by using any existing or future emerging encoding network (e.g., the Encoder module in the transformer model, the Encoder module in the conformer model, etc.).

In addition, lengths of the sequence of visual features and the sequence of semantic features of the target attribute each is a predetermined dimension, and a dimension of the concatenated sequence is two times the predetermined dimension. For an example, the predetermined dimension is 128 dimensions.

A specific implementation of determining a plurality of object attributes of the target object based on the sequence of key information features and the sequence of multimodal features in S 103 is described hereinafter in detail. Specifically, the sequence of key information features and the sequence of multimodal features may be inputted into a pre-trained multimodal fusion model to obtain the plurality of object attributes of the target object.

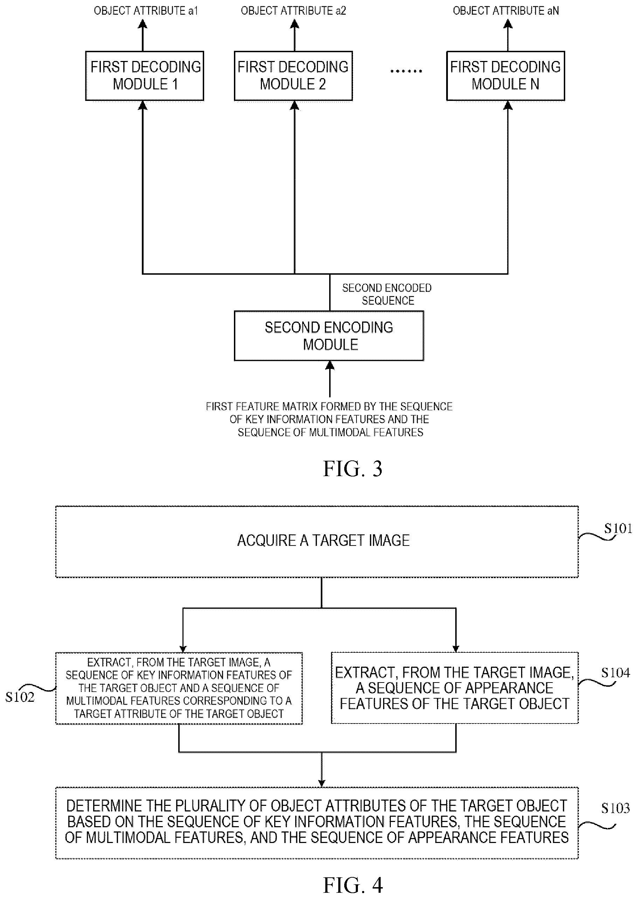

As shown in FIG. 3, the multimodal fusion model may comprise a second encoding module and a plurality of first decoding modules corresponding one-to-one to attribute categories of the plurality of object attributes (exemplified in FIG. 3 by N decoding modules, with N being greater than 1), connected to the second encoding module respectively.

The second encoding module is configured to encode a first feature matrix formed by the sequence of key information features and the sequence of multimodal features to obtain a second encoded sequence, wherein the sequence of key information features and the sequence of multimodal features are both of a predetermined dimension.

The first decoding module is configured to generate an object attribute under the corresponding attribute category based on the second encoded sequence, wherein the attribute categories of the object attributes are different from each other, i.e., the number of the first decoding modules is equal to the number of the plurality of object attributes.

As shown in FIG. 3, a first decoding module 1 with an attribute category object of an object attribute al is configured to generate the object attribute a1, a first decoding module 2 with an attribute category object of an object attribute a2 is configured to generate the object attribute a2, ... and a first decoding module N with an attribute category object of an object attribute aN is configured to generate the object attribute aN.

For an example, the second encoding module may comprise 12 encoding networks in series, and the first decoding module may comprise one decoding network.

In order to further improve the accuracy of the object attribute recognition and the richness of the object attributes, when the object attributes are recognized, not only the sequence of key information features and the sequence of multimodal features can be referred to, but also the appearance features of the target object can be referred to. Specifically, as shown in FIG. 4, the method may further comprise the following S104.

In S104, a sequence of appearance features of the target object are extracted from the target image.

In this case, the plurality of object attributes of the target object may be determined based on the sequence of key information features, the sequence of multimodal features, and the sequence of appearance features in S103. Specifically, the sequence of key information features, the sequence of multimodal features, and the sequence of appearance features may be inputted into a pre-trained multimodal fusion model to obtain the plurality of object attributes of the target object. Herein the second encoding module in the multimodal fusion model is configured to encode a feature matrix formed by the sequence of key information features, the sequence of multimodal features, and the sequence of appearance features.

A specific implementation of extracting, from the target image, a sequence of appearance features of the target object in S104 is described hereinafter in detail. Specifically, the target image may be inputted into a pre-trained appearance feature extraction model to obtain the sequence of appearance features of the target object.

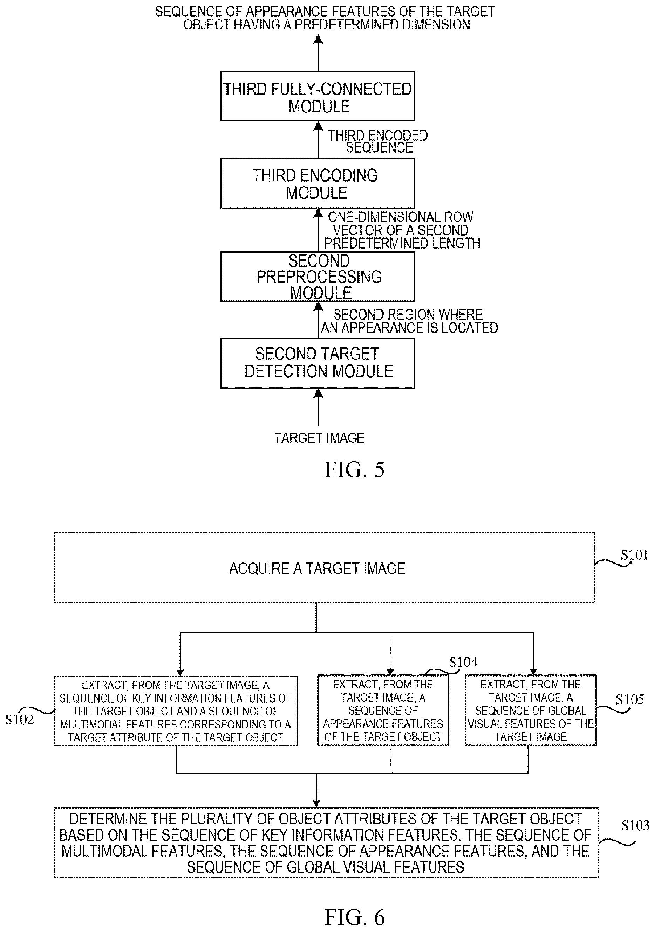

As shown in FIG. 5, the appearance feature extraction model may comprise a second target detection module, a second preprocessing module, a third encoding module, and a third fully-connected module connected in sequence.

Herein, the second target detection module is configured to extract, from the target image, a second region where an appearance of the target object is located. The appearance may comprise the exterior of the target object, the packaging of the target object, and the like. The second preprocessing module is configured to normalize the second region into an image of a second predetermined size (e.g., 16*16) and straighten the normalized image into a one-dimensional row vector of a second predetermined length (e.g., 256). The third encoding module is configured to encode the one-dimensional row vector of the second predetermined length to obtain a third encoded sequence. The third fully-connected module is configured to perform dimensionality reduction on the third encoded sequence to obtain the sequence of appearance features of the target object with a predetermined dimension.

In the present disclosure, the second target detection module may be, for example, a YOLO network, an SSD, and the like.

For an example, the third encoding module may comprise 2 layers of encoding networks in series. The 2 layers of encoding networks in series are not limited in the embodiments of the present disclosure and may be implemented by using any existing or future emerging of encoding network (e.g., the Encoder module in the transformer model, the Encoder module in the conformer model, etc.). The third fully-connected module may comprise 2 layers of fully-connected layers in series.

In order to further improve the accuracy of the object attribute recognition and the richness of the object attributes, when the object attributes are recognized, not only the sequence of key information features, the sequence of multimodal features, and the appearance features of the target object can be referred to, but also the sequence of global visual features of the target image can be referred to. Specifically, as shown in FIG. 6, the method may further comprise the following S105.

In S105, a sequence of global visual features of the target image are extracted from the target image.

In this case, the plurality of object attributes of the target object may be determined based on the sequence of key information features, the sequence of multimodal features, the sequence of appearance features, and the sequence of global visual features in S103. Specifically, the sequence of key information features, the sequence of multimodal features, the sequence of appearance features, and the sequence of global visual features may be inputted into a pre-trained multimodal fusion model to obtain the plurality of object attributes of the target object. Herein, the second encoding module in the multimodal fusion model is configured to encode a feature matrix composed of the sequence of key information features, the sequence of multimodal features, the sequence of appearance features, and the sequence of global visual features.

In addition, lengths of the sequence of key information features, the sequence of multimodal features, the sequence of appearance features, and the sequence of global visual features each is a predetermined length.

A specific implementation of extracting, from the target image, a sequence of global visual features of the target image in S 105 is described hereinafter in detail. Specifically, the target image may be inputted into a pre-trained global visual feature extraction model to obtain the sequence of global visual features of the target image.

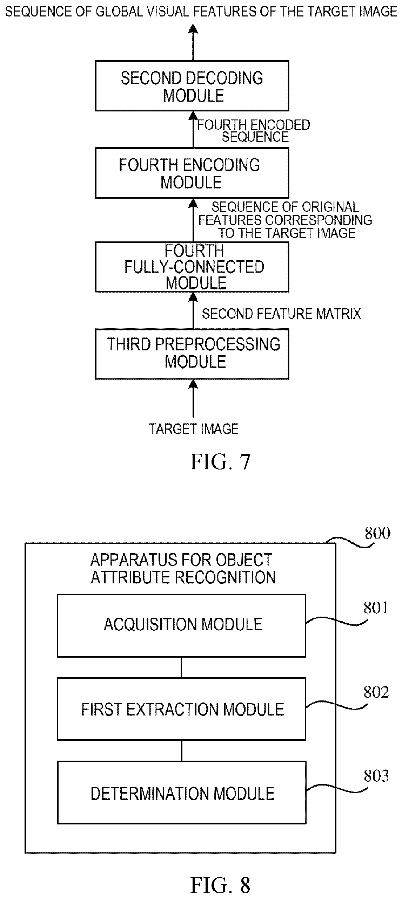

As shown in FIG. 7, the global visual feature extraction model may comprise a third preprocessing module, a fourth fully-connected module, a fourth encoding module, and a second decoding module connected in sequence.

The third preprocessing module is configured to adjust the target image to be of a third predetermined size (e.g., 256*256), partition the size-adjusted target image into a plurality of image blocks according to a fourth predetermined size (e.g., 16*16), and thereafter, straighten each of the image blocks into a one-dimensional feature vector of a third predetermined length (e.g., 256), and form a second feature matrix from each of the one-dimensional feature vectors of the third predetermined length (e.g., 256). The fourth fully-connected module is configured to generate, based on the second feature matrix, a sequence of original features corresponding to the target image. The fourth encoding module is configured to encode the sequence of original features to obtain a fourth encoded sequence. The second decoding module is configured to decode the fourth encoded sequence to obtain the sequence of global visual features of the target image.

For an example, the fourth fully-connected module may comprise 2 layers of fully-connected layers in series, the fourth encoding module may comprise 6 layers encoding networks in series, and the second decoding module may comprise a decoding network.

FIG. 8 is a block diagram illustrating an apparatus for object attribute recognition according to an example embodiment. As shown in FIG. 8, the apparatus 800 may comprise:
an acquisition module 801 configured to acquire a target image, wherein the target image comprises a target object and object description information of the target object;
a first extraction module 802 configured to extract, from the target image acquired by the acquisition module 801, a sequence of key information features of the target object and a sequence of multimodal features corresponding to a target attribute of the target object, wherein the sequence of multimodal features comprises a sequence of visual features and a sequence of semantic features of the target attribute; and
a determination module 803 configured to determine a plurality of object attributes of the target object based on the sequence of key information features and the sequence of multimodal features extracted by the first extraction module 802, wherein the plurality of object attributes comprises the target attribute.

In the above technical solutions, first, a target image is acquired, wherein the target image comprises a target object and object description information of the target object. Then, a sequence of key information features of the target object and a sequence of multimodal features corresponding to a target attribute of the target object is extracted from the target image, wherein the sequence of multimodal features comprises a sequence of visual features and a sequence of semantic features of the target attribute. Finally, a plurality of object attributes of the target object are determined based on the sequence of key information features and the sequence of multimodal features, wherein the plurality of object attributes comprises the target attribute. In this way, when an attribute of the target object in the target image is recognized, not only the key information features of the target object are referred to, but also the visual features and semantic features of the target attribute are referred to, which makes the feature dimensions of the target object richer and the information more comprehensive, and thus improves the accuracy of the object attribute recognition and the richness of the object attributes.

Optionally, the first extraction module 802 is configured for inputting the target image into a pre-trained multimodal feature extraction model to obtain the sequence of multimodal features corresponding to the target attribute of the target object.

Optionally, the multimodal feature extraction model comprises:
a first target detection module configured to extract, from the target image, a first region where an identification of the target attribute of the target object is located;
a first preprocessing module connected to the first target detection module and configured to normalize the first region into an image of a first predetermined size and straighten the normalized image into a one-dimensional row vector of a first predetermined length;
a first fully-connected module connected to the first preprocessing module and configured to generate the sequence of visual features of the target attribute based on the one-dimensional row vector of the first predetermined length;
a text recognition module connected to the first target detection module and configured to perform text recognition of the first region to obtain attribute description text of the target attribute;
a multilingual language sub-model connected to the text recognition module and configured to extract, from the attribute description text, the sequence of semantic features of the target attribute;
a concatenating module connected to the first fully-connected module and the multilingual language sub-model respectively, and configured to concatenate the sequence of visual features and the sequence of semantic features of the target attribute to obtain a concatenated sequence;
a first encoding module connected to the concatenate module and configured to encode the concatenated sequence to obtain a first encoded sequence; and
a second fully-connected module connected to the first encoding module and configured to perform dimensionality reduction on the first encoded sequence to obtain the sequence of multimodal features of a predetermined dimension corresponding to the target attribute.

Optionally, the first extraction module 802 comprises:
a recognition submodule configured for performing text recognition on the target image to obtain the recognized text, wherein the recognized text is a multilingual text or a monolingual text; and
an input submodule configured for inputting the recognized text into a pre-trained multilingual language model to obtain the sequence of key information features of the target object.

Optionally, the determination module 802 is configured for inputting the sequence of key information features and the sequence of multimodal features into a pre-trained multimodal fusion model to obtain the plurality of object attributes of the target object;
wherein the multimodal fusion model comprises:
a second encoding module configured to encode a first feature matrix formed by the sequence of key information features and the sequence of multimodal features to obtain a second encoded sequence, wherein the sequence of key information features and the sequence of multimodal features are both of a predetermined dimension; and
a plurality of first decoding modules corresponding one-to-one to attribute categories of the plurality of object attributes, connected to the second encoding module respectively, and configured to generate an object attribute under the corresponding attribute category based on the second encoded sequence, wherein the attribute categories of the object attributes are different from each other.

Optionally, the apparatus 800 further comprises:
a second extraction module configured for extracting, from the target image, a sequence of appearance features of the target object;
the determination module 803 is configured for determining the plurality of object attributes of the target object based on the sequence of key information features, the sequence of multimodal features, and the sequence of appearance features.

Optionally, the second extraction module is configured for inputting the target image into a pre-trained appearance feature extraction model to obtain the sequence of appearance features of the target object, the appearance feature extraction model comprising a second target detection module, a second preprocessing module, a third encoding module, and a third fully-connected module connected in sequence;
wherein the second target detection module is configured to extract, from the target image, a second region where an appearance of the target object is located;
the second preprocessing module is configured to normalize the second region into an image of a second predetermined size and straighten the normalized image into a one-dimensional row vector of a second predetermined length;
the third encoding module is configured to encode the one-dimensional row vector of the second predetermined length to obtain a third encoded sequence; and
the third fully-connected module is configured to perform dimensionality reduction on the third encoded sequence to obtain the sequence of appearance features of the target object with a predetermined dimension.

Optionally, the apparatus 800 further comprises:
a third extraction module configured for extracting, from the target image, a sequence of global visual features of the target image;
the determination module 803 is configured for determining the plurality of object attributes of the target object based on the sequence of key information features, the sequence of multimodal features, the sequence of appearance features, and the sequence of global visual features.

Optionally, the third extraction module is configured for inputting the target image into a pre-trained global visual feature extraction model to obtain the sequence of global visual features of the target image, the global visual feature extraction model comprising a third preprocessing module, a fourth fully-connected module, a fourth encoding module, and a second decoding module connected in sequence;
wherein the third preprocessing module is configured to adjust the target image to be of a third predetermined size, partition the size-adjusted target image into a plurality of image blocks according to a fourth predetermined size, and thereafter, straighten each of the image blocks into a one-dimensional feature vector of a third predetermined length, and form a second feature matrix from each of the one-dimensional feature vectors of the third predetermined length;
the fourth fully-connected module is configured to generate, based on the second feature matrix, a sequence of original features corresponding to the target image;
the fourth encoding module is configured to encode the sequence of original features to obtain a fourth encoded sequence; and
the second decoding module is configured to decode the fourth encoded sequence to obtain the sequence of global visual features of the target image.

The present disclosure also provides a computer-readable medium having a computer program stored thereon, wherein the program, when executed by a processing device, implements the steps of the method of object attribute recognition provided in the present disclosure.

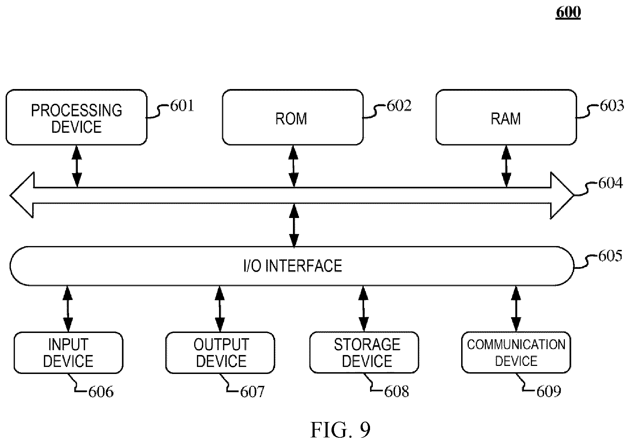

Refer to FIG. 9, which shows a schematic diagram of an electronic device (a terminal device or a server) 600 according to an embodiment of the present disclosure. The terminal device in the embodiment of the present disclosure may comprise but is not limited to a mobile terminal, such as a mobile phone, a notebook computer, a digital broadcast receiver, a personal digital assistant (PDA), a tablet computer (PAD), a portable multimedia player (PMP), an onboard terminal (such as an onboard navigation terminal), and a fixed terminal, such as a digital TV and a desktop computer. The electronic device shown in FIG. 9 is only an example and should not limit the function and application range of the embodiments of the present disclosure.

As shown in FIG. 9, the electronic device 600 may comprise a processing apparatus (such as a central processing unit, a graphics processing unit, or the like) 601 that may perform various appropriate actions and processing according to a program stored in a read-only memory (ROM) 602 or a program loaded from a storage apparatus 608 into a random-access memory (RAM) 603. In the RAM 603, various programs and data required for operation of the electronic device are further stored. The processing apparatus 601, the ROM 602, and the RAM 603 are connected to each other by using a bus 604. An input/output (I/O) interface 605 is also connected to the bus 604.

Generally, the following apparatuses may be connected to the I/O interface 605: input apparatuses 606 comprising, for example, a touchscreen, a touchpad, a keyboard, a mouse, a camera, a microphone, an accelerometer, and a gyroscope; output apparatuses 607 comprising, for example, a liquid crystal display (LCD), a loudspeaker and a vibrator; storage apparatuses 608 comprising, for example, a tape or a hard disk; and a communications apparatus 609. The communications apparatus 609 may allow the electronic device to communicate wirelessly or wiredly with another device to exchange data. Although FIG. 9 shows an electronic device 600 with various apparatuses, it should be understood that it is not required to implement or provide all shown apparatuses.

Alternatively, more, or fewer apparatuses may be implemented or provided.

In particular, according to the embodiments of the present disclosure, the process described above with reference to the flowchart may be implemented as a computer software program. For example, an embodiment of the present disclosure comprises a computer software program product that comprises a computer program carried on a readable medium, and the computer program comprises program codes used to perform the methods shown in the flowchart. In such an embodiment, the computer program may be downloaded and installed from a network by using the communications apparatus 609, installed from the storage apparatus 608, or installed from the ROM 602. When the computer program is executed by the processing apparatus 601, the foregoing functions defined in the method in the embodiments of the present disclosure are executed.

It should be noted that the foregoing computer-readable medium in the present disclosure may be a computer-readable signal medium, a computer-readable storage medium, or any combination of the two. The computer-readable storage medium may be, for example, an electrical, magnetic, optical, electromagnetic, infrared, or semiconductor system, apparatus, or device, or any combination thereof. More specific examples of the computer-readable storage medium may comprise but are not limited to: an electrical connection having one or more conducting wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that comprises or stores a program, and the program may be used by or in combination with an instruction execution system, apparatus, or device. In the present disclosure, the computer-readable signal medium may comprise a data signal propagated in a baseband or as a part of a carrier, which carries computer-readable program codes. Such a propagated data signal may be in multiple forms, comprising but not limited to an electromagnetic signal, an optical signal, or any suitable combination thereof. The computer-readable signal medium may further be any computer-readable medium other than the computer-readable storage medium, and the computer-readable signal medium may send, propagate, or transmit a program that is used by or in combination with an instruction execution system, apparatus, or device. The program code comprised in the computer-readable medium may be transmitted by using any suitable medium, comprising but not limited to: a wire, an optical cable, a radio frequency (RF), or any suitable combination thereof.

In some embodiments, the client and the server can communicate by using any currently known or future-developed network protocol, for example, an HTTP (Hyper Text Transfer Protocol), and can be interconnected by a communication network of any form or any medium. Examples of the communication network comprise a local area network (LAN), a wide area network (WAN), an internet network (for example, the Internet), and an end-to-end network (for example, an ad hoc end-to-end network), and any currently known or future-developed network.

The computer readable medium may be comprised in the foregoing electronic device or may exist separately and not be assembled into the electronic device.

The computer-readable medium carries one or more programs. The one or more programs, when being executed by the electronic device, enable the electronic device to: acquire a target image, wherein the target image includes a target object and object description information of the target object; extract from the target image a sequence of key information features of the target object and a sequence of multimodal features corresponding to a target attribute of the target object, the sequence of multimodal features comprising a sequence of visual features and a sequence of semantic features of the target attribute; determine a plurality of object attributes of the target object based on the sequence of key information features and the sequence of multimodal features, the plurality of object attributes comprising the target attribute.

Computer program codes for performing the operations of the present disclosure may be written in one or more programming languages or a combination thereof, such as object-oriented programming languages Java, Smalltalk, C++, and conventional procedural programming languages such as "C" or similar program design languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, comprising a local area network (LAN) or a wide area network (WAN), or may be connected to an external computer (for example, through the Internet by using an Internet service provider).

Flowcharts and block diagrams in the accompanying drawings illustrate possible architectures, functions, and operations of systems, methods, and computer program products according to various embodiments of the present disclosure. In this regard, each block in a flowchart or block diagram may represent a module, program partition, or part of code that comprises one or more executable instructions for implementing a specified logical function. It should also be noted that in some alternative implementations, functions marked in the block may also occur in different order than those marked in the accompanying drawings. For example, two blocks represented in succession may actually be executed in substantially parallel, and they may sometimes be executed in a reverse order, depending on the functions involved. It should also be noted that each block in the block diagram and/or flowchart and a combination of blocks in the block diagram and/or flowchart may be implemented by using a dedicated hardware-based system that performs a specified function or operation or may be implemented by using a combination of dedicated hardware and a computer instruction.

The units described in embodiments of the present disclosure may be implemented either by means of software or by means of hardware. The names of these units do not limit the units themselves under certain circumstances. For example, the acquisition module may be described as "a module for acquiring a target image".

Various functions described herein above can be implemented by one or more hardware logic members. For example and without limitations thereto, an example hardware logic member comprises a field programmable gate array (FPGA), an application-specific integrated circuit (ASIC), an application-specific standard product (ASSP), a system-on-chip system (SOC), a complex programmable logic device (CPLD) or the like.

In the context of the present disclosure, a machine-readable medium may be a tangible medium that may include or store a program for use by or in connection with an instruction execution system, apparatus, or device. The machine-readable medium may be a machine-readable signal medium or a machine-readable storage medium. Machine-readable media may comprise, but are not limited to, electronic, magnetic, optical, electromagnetic, infrared, or semiconductor systems, apparatuses or devices, or any suitable combination of the foregoing. More specific examples of machine-readable storage media would comprise one or more wire-based electrical connections, portable computer disks, hard disks, random-access memories (RAMs), read-only memories (ROMs), erasable programmable read-only memories (EPROM or flash memories), fiber optics, portable compact disk read only memories (CD-ROMs), optical storage devices, magnetic storage devices, or any suitable combination of the foregoing.

According to one or more embodiments of the present disclosure, example 1 provides a method of object attribute recognition, comprising: acquiring a target image, wherein the target image comprises a target object and object description information of the target object; extracting, from the target image, a sequence of key information features of the target object and a sequence of multimodal features corresponding to a target attribute of the target object, wherein the sequence of multimodal features comprises a sequence of visual features and a sequence of semantic features of the target attribute; and determining a plurality of object attributes of the target object based on the sequence of key information features and the sequence of multimodal features, wherein the plurality of object attributes comprises the target attribute.

In accordance with one or more embodiments of the present disclosure, example 2 provides the method of example 1, extracting, from the target image, the sequence of multimodal features corresponding to the target attribute of the target object comprises:
inputting the target image into a pre-trained multimodal feature extraction model to obtain the sequence of multimodal features corresponding to the target attribute of the target object.

According to one or more embodiments of the present disclosure, example 3 provides the method of example 2, the multimodal feature extraction model comprises: a first target detection module configured to extract, from the target image, a first region where an identification of the target attribute of the target object is located; a first preprocessing module connected to the first target detection module and configured to normalize the first region into an image of a first predetermined size and straighten the normalized image into a one-dimensional row vector of a first predetermined length; a first fully-connected module connected to the first preprocessing module and configured to generate the sequence of visual features of the target attribute based on the one-dimensional row vector of the first predetermined length; a text recognition module connected to the first target detection module and configured to perform text recognition of the first region to obtain attribute description text of the target attribute; a multilingual language sub-model connected to the text recognition module and configured to extract, from the attribute description text, the sequence of semantic features of the target attribute; a concatenating module connected to the first fully-connected module and the multilingual language sub-model respectively, and configured to concatenate the sequence of visual features and the sequence of semantic features of the target attribute to obtain a concatenated sequence; a first encoding module connected to the concatenate module and configured to encode the concatenated sequence to obtain a first encoded sequence; and a second fully-connected module connected to the first encoding module and configured to perform dimensionality reduction on the first encoded sequence to obtain the sequence of multimodal features of a predetermined dimension corresponding to the target attribute.

According to one or more embodiments of the present disclosure, example 4 provides the method of example 1, extracting, from the target image, the sequence of key information features of the target object comprises: performing text recognition on the target image to obtain the recognized text, wherein the recognized text is a multilingual text or a monolingual text; and inputting the recognized text into a pre-trained multilingual language model to obtain the sequence of key information features of the target object.

According to one or more embodiments of the present disclosure, example 5 provides the method of example 1, determining the plurality of object attributes of the target object based on the sequence of key information features and the sequence of multimodal features comprises: inputting the sequence of key information features and the sequence of multimodal features into a pre-trained multimodal fusion model to obtain the plurality of object attributes of the target object; wherein the multimodal fusion model comprises: a second encoding module configured to encode a first feature matrix formed by the sequence of key information features and the sequence of multimodal features to obtain a second encoded sequence, wherein the sequence of key information features and the sequence of multimodal features are both of a predetermined dimension; and a plurality of first decoding modules corresponding one-to-one to attribute categories of the plurality of object attributes, connected to the second encoding module respectively, and configured to generate an object attribute under the corresponding attribute category based on the second encoded sequence, wherein the attribute categories of the object attributes are different from each other.

According to one or more embodiments of the present disclosure, example 6 provides the method described in any one of examples 1-5, the method further comprises: extracting, from the target image, a sequence of appearance features of the target object; and determining the plurality of object attributes of the target object based on the sequence of key information features and the sequence of multimodal features comprises: determining the plurality of object attributes of the target object based on the sequence of key information features, the sequence of multimodal features, and the sequence of appearance features.

According to one or more embodiments of the present disclosure, example 7 provides the method of example 6, extracting, from the target image, a sequence of appearance features of the target object comprises: inputting the target image into a pre-trained appearance feature extraction model to obtain the sequence of appearance features of the target object, the appearance feature extraction model comprising a second target detection module, a second preprocessing module, a third encoding module, and a third fully-connected module connected in sequence; wherein the second target detection module is configured to extract, from the target image, a second region where an appearance of the target object is located; the second preprocessing module is configured to normalize the second region into an image of a second predetermined size and straighten the normalized image into a one-dimensional row vector of a second predetermined length; the third encoding module is configured to encode the one-dimensional row vector of the second predetermined length to obtain a third encoded sequence; and the third fully-connected module is configured to perform dimensionality reduction on the third encoded sequence to obtain the sequence of appearance features of the target object with a predetermined dimension.

According to one or more embodiments of the present disclosure, example 8 provides the method of example 6, the method further comprises: extracting, from the target image, a sequence of global visual features of the target image; and determining the plurality of object attributes of the target object based on the sequence of key information features, the sequence of multimodal features, and the sequence of appearance features comprises: determining the plurality of object attributes of the target object based on the sequence of key information features, the sequence of multimodal features, the sequence of appearance features, and the sequence of global visual features

According to one or more embodiments of the present disclosure, example 9 provides the method of example 8, extracting, from the target image, the sequence of global visual features of the target object comprises: inputting the target image into a pre-trained global visual feature extraction model to obtain the sequence of global visual features of the target image, the global visual feature extraction model comprising a third preprocessing module, a fourth fully-connected module, a fourth encoding module, and a second decoding module connected in sequence; wherein the third preprocessing module is configured to adjust the target image to be of a third predetermined size, partition the size-adjusted target image into a plurality of image blocks according to a fourth predetermined size, and thereafter, straighten each of the image blocks into a one-dimensional feature vector of a third predetermined length, and form a second feature matrix from each of the one-dimensional feature vectors of the third predetermined length; the fourth fully-connected module is configured to generate, based on the second feature matrix, a sequence of original features corresponding to the target image; the fourth encoding module is configured to encode the sequence of original features to obtain a fourth encoded sequence; and the second decoding module is configured to decode the fourth encoded sequence to obtain the sequence of global visual features of the target image.

According to one or more embodiments of the present disclosure, example 10 provides an apparatus for object attribute recognition, comprising: an acquisition module configured to acquire a target image, wherein the target image comprises a target object and object description information of the target object; a first extraction module configured to extract, from the target image, a sequence of key information features of the target object and a sequence of multimodal features corresponding to a target attribute of the target object, wherein the sequence of multimodal features comprises a sequence of visual features and a sequence of semantic features of the target attribute; and a determination module configured to determine a plurality of object attributes of the target object based on the sequence of key information features and the sequence of multimodal features extracted by the first extraction module, wherein the plurality of object attributes comprises the target attribute.

In accordance with one or more embodiments of the present disclosure, example 11 provides a computer-readable medium having a computer program stored thereon, wherein the program, when executed by a processing device, implements the steps of the method of examples 1-9.

According to one or more embodiments of the present disclosure, example 12 provides an electronic device, comprising: a storage device having a computer program stored thereon; and a processing device configured to execute the computer program in the storage device to implement the steps of the method of any of examples 1-9.

The above description is only a preferred embodiment of the present disclosure and an illustration of the technical principles utilized. It should be understood by those skilled in the art that the scope of disclosure involved in the present disclosure is not limited to technical solutions formed by a particular combination of the above technical features, but also covers other technical solutions formed by any combination of the above technical features or their equivalent features without departing from the above disclosed concept, for example, a technical solution formed by interchanging the above features with (but not limited to) technical features with similar functions disclosed in the present disclosure.

Furthermore, while the operations are depicted using a particular order, this should not be construed as requiring that the operations be performed in the particular order shown or in sequential order of execution. Multitasking and parallel processing may be advantageous in certain environments. Similarly, while several specific implementation details are comprised in the above discussion, these should not be construed as limiting the scope of the present disclosure. Certain features described in the context of separate embodiments may also be implemented in combination in a single embodiment. Conversely, various features described in the context of a single embodiment may also be implemented in multiple embodiments, either individually or in any suitable sub-combination.

Although the present subject matter has been described using language specific to structural features and/or method logical actions, it should be understood that the subject matter limited in the appended claims is not necessarily limited to the particular features or actions described above. Rather, the particular features and actions described above are merely example forms of implementing the claims. With respect to the apparatus in the above embodiments, the specific manner in which the individual modules perform the operations has been described in detail in the embodiments relating to the method, and will not be described in detail herein.

## Claims

1. A method of object attribute recognition, **characterized in** comprising:
acquiring a target image, wherein the target image comprises a target object and object description information of the target object;
extracting, from the target image, a sequence of key information features of the target object and a sequence of multimodal features corresponding to a target attribute of the target object, wherein the sequence of multimodal features comprises a sequence of visual features and a sequence of semantic features of the target attribute; and
determining a plurality of object attributes of the target object based on the sequence of key information features and the sequence of multimodal features, wherein the plurality of object attributes comprises the target attribute.

2. The method of claim 1, **characterized in that** extracting, from the target image, the sequence of multimodal features corresponding to the target attribute of the target object comprises:
inputting the target image into a pre-trained multimodal feature extraction model to obtain the sequence of multimodal features corresponding to the target attribute of the target object.

3. The method of claim 2, **characterized in that** the multimodal feature extraction model comprises:
a first target detection module configured to extract, from the target image, a first region where an identification of the target attribute of the target object is located;
a first preprocessing module connected to the first target detection module and configured to normalize the first region into an image of a first predetermined size and straighten the normalized image into a one-dimensional row vector of a first predetermined length;
a first fully-connected module connected to the first preprocessing module and configured to generate the sequence of visual features of the target attribute based on the one-dimensional row vector of the first predetermined length;
a text recognition module connected to the first target detection module and configured to perform text recognition of the first region to obtain attribute description text of the target attribute;
a multilingual language sub-model connected to the text recognition module and configured to extract, from the attribute description text, the sequence of semantic features of the target attribute;
a concatenating module connected to the first fully-connected module and the multilingual language sub-model respectively, and configured to concatenate the sequence of visual features and the sequence of semantic features of the target attribute to obtain a concatenated sequence;
a first encoding module connected to the concatenate module and configured to encode the concatenated sequence to obtain a first encoded sequence; and
a second fully-connected module connected to the first encoding module and configured to perform dimensionality reduction on the first encoded sequence to obtain the sequence of multimodal features of a predetermined dimension corresponding to the target attribute.

4. The method of claim 1, **characterized in that** extracting, from the target image, the sequence of key information features of the target object comprises:
performing text recognition on the target image to obtain the recognized text, wherein the recognized text is a multilingual text or a monolingual text; and
inputting the recognized text into a pre-trained multilingual language model to obtain the sequence of key information features of the target object.

5. The method of claim 1, **characterized in that** determining the plurality of object attributes of the target object based on the sequence of key information features and the sequence of multimodal features comprises:
inputting the sequence of key information features and the sequence of multimodal features into a pre-trained multimodal fusion model to obtain the plurality of object attributes of the target object;
wherein the multimodal fusion model comprises:
a second encoding module configured to encode a first feature matrix formed by the sequence of key information features and the sequence of multimodal features to obtain a second encoded sequence, wherein the sequence of key information features and the sequence of multimodal features are both of a predetermined dimension; and
a plurality of first decoding modules corresponding one-to-one to attribute categories of the plurality of object attributes, connected to the second encoding module respectively, and configured to generate an object attribute under the corresponding attribute category based on the second encoded sequence, wherein the attribute categories of the object attributes are different from each other.

6. The method of any of claims 1-5, **characterized in that** the method further comprises:
extracting, from the target image, a sequence of appearance features of the target object; and
determining the plurality of object attributes of the target object based on the sequence of key information features and the sequence of multimodal features comprises:
determining the plurality of object attributes of the target object based on the sequence of key information features, the sequence of multimodal features, and the sequence of appearance features.

7. The method of claim 6, **characterized in that** extracting, from the target image, a sequence of appearance features of the target object comprises:
inputting the target image into a pre-trained appearance feature extraction model to obtain the sequence of appearance features of the target object, the appearance feature extraction model comprising a second target detection module, a second preprocessing module, a third encoding module, and a third fully-connected module connected in sequence;
wherein the second target detection module is configured to extract, from the target image, a second region where an appearance of the target object is located;
the second preprocessing module is configured to normalize the second region into an image of a second predetermined size and straighten the normalized image into a one-dimensional row vector of a second predetermined length;
the third encoding module is configured to encode the one-dimensional row vector of the second predetermined length to obtain a third encoded sequence; and
the third fully-connected module is configured to perform dimensionality reduction on the third encoded sequence to obtain the sequence of appearance features of the target object with a predetermined dimension.

8. The method of claim 6, **characterized in that** the method further comprises:
extracting, from the target image, a sequence of global visual features of the target image; and
determining the plurality of object attributes of the target object based on the sequence of key information features, the sequence of multimodal features, and the sequence of appearance features comprises:
determining the plurality of object attributes of the target object based on the sequence of key information features, the sequence of multimodal features, the sequence of appearance features, and the sequence of global visual features.

9. The method of claim 8, **characterized in that** extracting, from the target image, the sequence of global visual features of the target object comprises:
inputting the target image into a pre-trained global visual feature extraction model to obtain the sequence of global visual features of the target image, the global visual feature extraction model comprising a third preprocessing module, a fourth fully-connected module, a fourth encoding module, and a second decoding module connected in sequence;
wherein the third preprocessing module is configured to adjust the target image to be of a third predetermined size, partition the size-adjusted target image into a plurality of image blocks according to a fourth predetermined size, and thereafter, straighten each of the image blocks into a one-dimensional feature vector of a third predetermined length, and form a second feature matrix from each of the one-dimensional feature vectors of the third predetermined length;
the fourth fully-connected module is configured to generate, based on the second feature matrix, a sequence of original features corresponding to the target image;
the fourth encoding module is configured to encode the sequence of original features to obtain a fourth encoded sequence; and
the second decoding module is configured to decode the fourth encoded sequence to obtain the sequence of global visual features of the target image.

10. An apparatus for object attribute recognition, **characterized in** comprising:
an acquisition module configured to acquire a target image, wherein the target image comprises a target object and object description information of the target object;
a first extraction module configured to extract, from the target image, a sequence of key information features of the target object and a sequence of multimodal features corresponding to a target attribute of the target object, wherein the sequence of multimodal features comprises a sequence of visual features and a sequence of semantic features of the target attribute; and
a determination module configured to determine a plurality of object attributes of the target object based on the sequence of key information features and the sequence of multimodal features extracted by the first extraction module, wherein the plurality of object attributes comprises the target attribute.

11. A computer-readable medium having a computer program stored thereon, **characterized in that** the program, when executed by a processing device, implements the steps of the method of any of claims 1-9.

12. An electronic device, comprising:
a storage device having a computer program stored thereon; and
a processing device configured to execute the computer program in the storage device to implement the steps of the method of any of claims 1-9.
